# EUROPEAN PATENT SPECIFICATION

(11) **EP 4 154 498 B1**
(45) Date of publication and mention of the grant of the patent: **09.10.2024**
(21) Application number: 21726410.0
(22) Date of filing: 19.05.2021
(51) Int. Cl.: H04L 67/02, H04L 67/51, H04L 67/56, H04L 67/63

(54) **SERVICE REQUEST HANDLING**
HANDHABUNG VON DIENSTANFRAGEN
GESTION DE DEMANDE DE SERVICE

(30) Priority: 20.05.2020 EP 20382429
(43) Date of publication of application: 29.03.2023
(73) Proprietor: Telefonaktiebolaget LM ERICSSON (PUBL), 16483 Stockholm (SE)
(72) Inventor: RODRIGO, Maria Cruz Bartolome, 28189 Torremocha de Jarama, Madrid (ES)
(74) Representative: Ericsson
(86) International application number: PCT/EP2021/063345
(87) International publication number: WO 2021/234029

(56) References cited:
- ORACLE: "Discussion of SCP Deployment Scenarios", vol. SA WG2, no. Tenerife, Spain; 20190225 - 20190301, 19 February 2019 (2019-02-19), XP051610362, Retrieved from the Internet <URL:http://www.3gpp.org/ftp/tsg%5Fsa/WG2%5FArch/TSGS2%5F131%5FTenerife/Docs/S2%2D1901765%2Ezip> [retrieved on 20190219]
- "3rd Generation Partnership Project; Technical Specification Group Services and System Aspects; System architecture for the 5G System (5GS); Stage 2 (Release 16)", 27 March 2020 (2020-03-27), XP051887241, Retrieved from the Internet <URL:https://ftp.3gpp.org/tsg_sa/WG2_Arch/Latest_SA2_Specs/DRAFT_INTERIM/Archive/23501-g40_CRs_Implemented_CR2195Fix_CR2085_mod_R4.zip 23501-g40_CRs_Implemented_CR2195Fix_CR2085_mod_R4.docx> [retrieved on 20200327]

## Description

### Technical Field

The disclosure relates to methods for handling a service request in a network and nodes configured to operate in accordance with those methods.

### Background

There exist various techniques for handling a request for a service in a network. A service request is generally from a consumer of the service ("service consumer") to a producer of the service ("service producer"). For example, a service request may be from a network function (NF) node of a service consumer to an NF node of a service producer. The NF node of the service consumer and the NF node of the service producer can communicate directly or indirectly. This is referred to as direct communication and indirect communication respectively. In the case of indirect communication, the NF node of the service consumer and the NF node of the service producer may communicate via a service communication proxy (SCP) node.

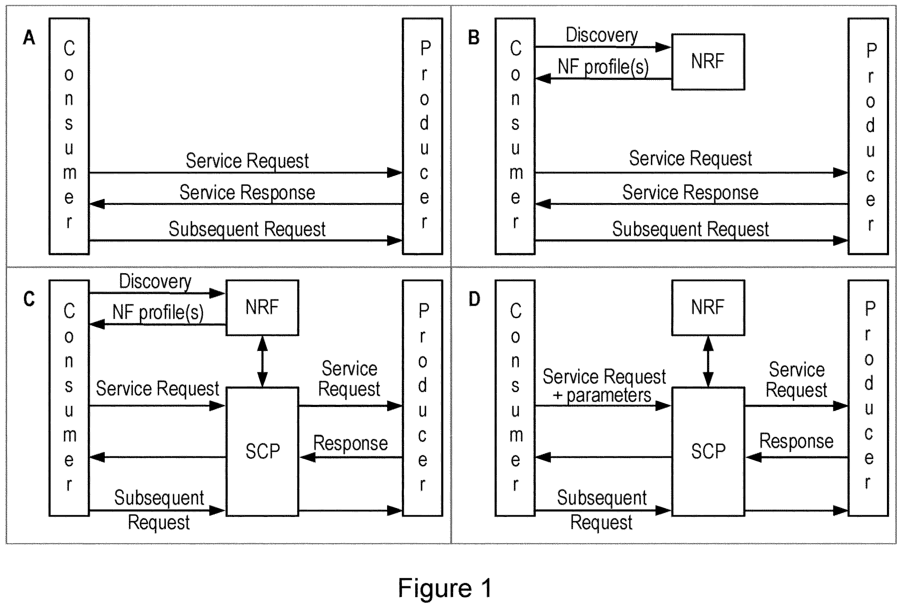

**Figure 1A-D** illustrates different existing systems for handling service requests, as set out in 3GPP TS 23.501 v16.4.0. In more detail, Figure 1A and 1B illustrates a system that uses direct communication, while Figure 1C and 1D illustrates a system that uses indirect communication.

In the systems illustrated in Figure 1A and 1B, a service request is sent directly from the NF node of the service consumer to the NF node of the service producer. A response to the service request is sent directly from the NF node of the service producer to the NF node of the service consumer. Similarly, any subsequent service requests are sent directly from the NF node of the service consumer to the NF node of the service producer. The system illustrated in Figure 1B also comprises a network repository function (NRF). Thus, in the system illustrated in Figure 1B, the NF node of the consumer can query the NRF to discover suitable NF nodes of the service producer to which to send the service request. In response to such a query, the NF node of the consumer can receive an NF profile for one or more NF nodes of the service producer and, based on the received NF profile(s) can select an NF node of the service producer to which to send the service request. In the system illustrated in Figure 1A, the NRF is not used and instead the NF node of the consumer may be configured with the NF profile(s) of the NF node(s) of the service producer.

In the systems illustrated in Figure 1C and 1D, a service request is sent indirectly from the NF node of the service consumer to the NF node of the service producer via a service communication proxy (SCP) node. A response to the service request is sent indirectly from the NF node of the service producer to the NF node of the service consumer via the SCP. Similarly, any subsequent service requests are sent indirectly from the NF node of the service consumer to the NF node of the service producer via the SCP. The systems illustrated in Figure 1C and D also comprise an NRF.

In the system illustrated in Figure 1C, the NF node of the consumer can query the NRF to discover suitable NF nodes of the service producer to which to send the service request. In response to such a query, the NF node of the consumer can receive an NF profile for one or more NF nodes of the service producer and, based on the received NF profile(s) can select an NF node of the service producer to which to send the service request. In this case, the service request sent from the NF node of the service consumer to the SCP comprises the address of the selected NF node of the service producer. The NF node of the service consumer can forward the service request without performing any further discovery or selection. In case the selected NF node of the service producer is not accessible for any reason, it may be up to the NF node of the service consumer to find an alternative. In other cases, the SCP may communicate with the NRF to acquire selection parameters (e.g. location, capacity, etc.) and the SCP may select an NF node of the service producer to which to send the service request.

In the system illustrated in Figure 1D, the NF node of the consumer does not carry out the discovery or selection process. Instead, the NF node of the consumer adds any necessary discovery and selection parameters (required to find a suitable NF node of the service producer) to the service request that it sends via the SCP. The SCP uses the request address and the discovery and selection parameters in the service request to route the service request to a suitable NF node of the service producer. The SCP can perform discovery with the NRF.

For the fifth generation core (5GC), from Release 16, the SCP is included as a network element to allow indirect communication between an NF node of a service consumer and an NF node of a service producer. The indirect communication that is used can be either of the two indirect communications options described earlier with reference to Figure 1C and 1D.

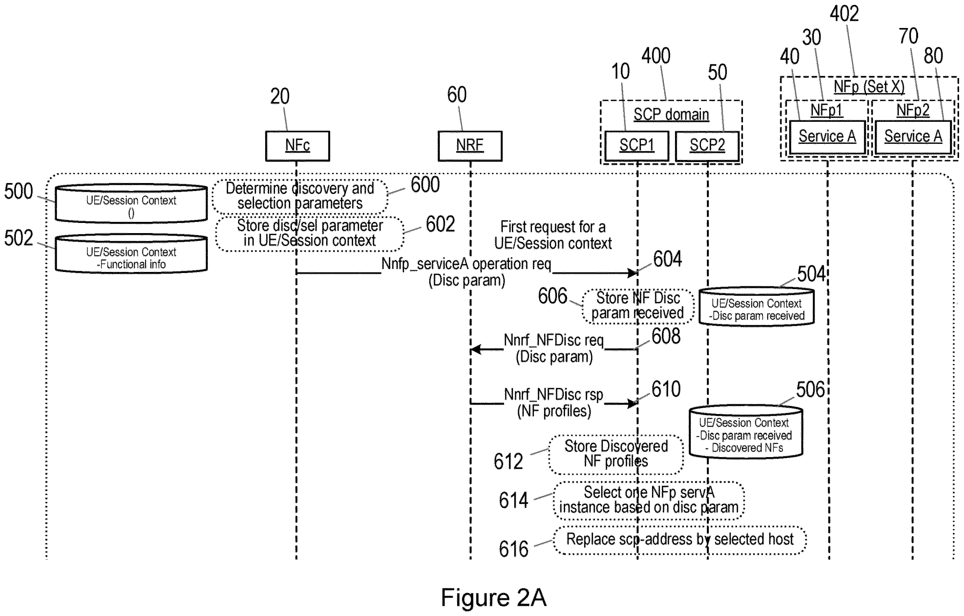

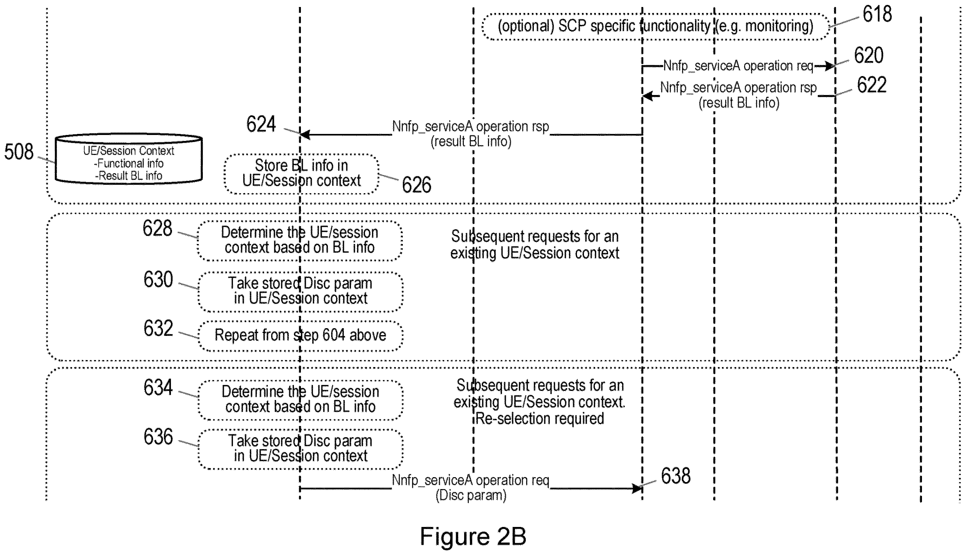

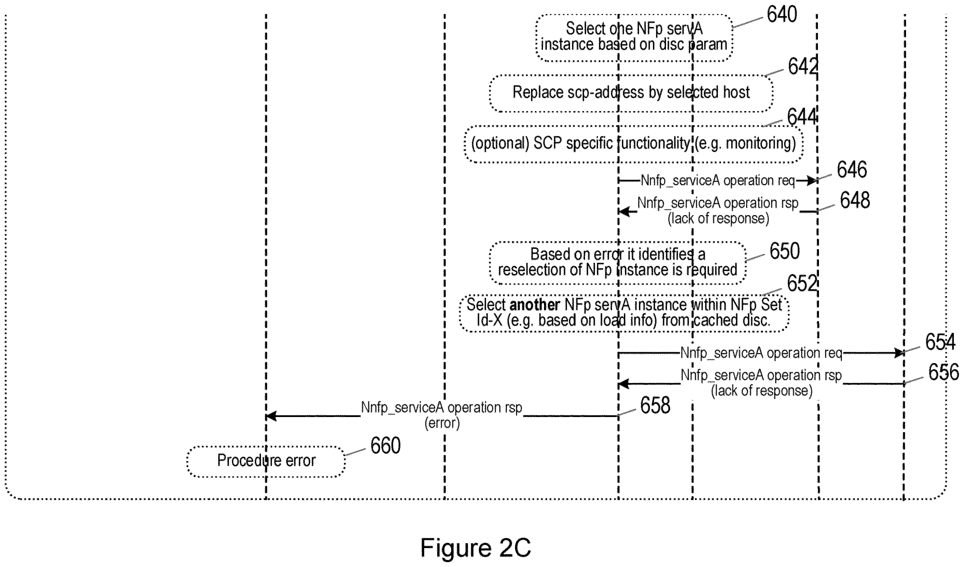

Figure 2A-C is a signalling diagram illustrating an exchange of signals in an existing system, such as the system illustrated in Figure 1D but it will be understood the issue described can also apply to the system illustrated in Figure 1C. The system illustrated in Figure 2A-C comprises a first SCP node 10, a second SCP node 50, a first NF node 20 of a service consumer ("NFc"), a second NF node 30 of a service producer ("NFp1"), and a third NF node 70 of a service producer ("NFp2"). The first SCP node 10 is configured to operate as an SCP between the first NF node 20 and the second NF node 30. The second SCP node 50 is configured to operate as an SCP between the first NF node 20 and the third NF node 70.

In the system illustrated in Figure 2A-C, the second SCP node 50 is an SCP node that is in the same SCP domain 400 as the first SCP node 10. The second SCP node 50 is a different SCP node to the first SCP node 10. The second NF node 30 can be configured to run a service 40 and the third NF node 70 can be configured to run a service 80. The second NF node 30 and the third NF node 70 can be configured to run the same service or a different service. The second NF node 30 and the third NF node 70 can be part of a set 402 of NF nodes of a service producer. The system illustrated in Figure 2A-C also comprises a network repository function 60.

In Figure 2A-C, steps 600-626 relate to a first request for a user equipment (UE)/session context. As illustrated by block 500 of Figure 2A-C, the UE/session context may be stored. In more detail, as illustrated by block 600 of Figure 2A-C, the first NF node 20 determines what discovery and selection parameters to use. The parameters can be associated with a certain service in a received request, which is not illustrated in Figure 2A-C. As illustrated by blocks 502 and 602 of Figure 2A-C, the first NF node 20 stores the UE/session context for the request received. This storage may be cached or externally stored.

As illustrated by arrow 604 of Figure 2A-C, the first NF node 20 initiates transmission of a service request towards the first SCP node 10. The first NF node 20 may know via which SCP to route the service request by configuration or other means. The service request can comprise information identifying the selected second NF node 30, such as a hypertext transfer protocol (HTTP) header that identifies the parameters to be used for discovery and selection. As illustrated by blocks 606 and 504 of Figure 2A-C, the first SCP node 10 can store the received parameters.

As illustrated by arrow 608 of Figure 2A-C, the first SCP node 10 initiates transmission of a discovery request to the NRF 60 to obtain NF profile(s) of one or more NF nodes of the service producer for the service that needs to be executed. As illustrated by arrow 610 of Figure 2A-C, the first SCP node 10 receives a response from the NRF 60 comprising the NF profile(s) of one or more NF nodes of the service producer. As illustrated by blocks 506 and 612 of Figure 2A-C, the first SCP node 10 can store the discovered NF profile(s) in the corresponding UE/session context. As illustrated by block 614 of Figure 2A-C, the first SCP node 10 selects one NF node of the service producer from the one(s) discovered using, for example, functional criteria (e.g. subscription permanent identifier (SUPI), network slice selection assistance information (NSSAI), data network name (DNN), etc.) or non-functional criteria (e.g. load, capacity, etc.). For the purpose of the illustration, it is assumed that the first SCP node 10 selects the second NF node 30.

As illustrated by block 616 of Figure 2A-C, the first SCP node 10 replaces its own address in the host part of the uniform resource identifier (URI) by the one included in service request (the target Application Programming Interface, API, root). As illustrated by block 618 of Figure 2A-C, the first SCP node 10 may perform any extra functionality, such as monitoring/tracing. As illustrated by arrow 620 of Figure 2A-C, the first SCP node 10 initiates transmission of the service request towards the selected second NF node 30. As illustrated by arrow 622 of Figure 2A-C, the first SCP node 10 receives a response comprising the result. The result may comprise some business logic (BL) information, e.g. as a result of the service execution. As illustrated by arrow 624 of Figure 2A-C, the first SCP node 10 initiates transmission of the response comprising the result towards the first NF node 20. As illustrated by blocks 508 and 626 of Figure 2A-C, the first NF node 20 can store the result.

In Figure 2A-C, steps 628-632 relate to subsequent service requests for an existing UE/Session context. As illustrated by block 628 of Figure 2A-C, another request (not illustrated) to execute a service is received by the first NF node 20 and this service request is identified to correspond to the same UE/session context in respect of which the earlier request was received. As illustrated by block 630 of Figure 2A-C, the first NF node 20 takes the discovery parameters stored in corresponding UE/session context. As illustrated by block 632 of Figure 2A-C, the first NF node 20 selects an NF node of the service producer based on discovery parameters from the cached information and repeats steps 616 of Figure 2A-C onwards are repeated. If the information is not cached, steps 604 of Figure 2A-C onwards are repeated.

In Figure 2A-C, steps 634-660 relate to subsequent service requests for an existing UE/Session context where reselection is required, where steps 634-636 are the same as steps 628-630, step 638 is the same as step 604, and steps 640-646 are the same as steps 614-620. However, as illustrated by arrow 648 of Figure 2A-C, there is a lack of response from the second NF node 30. As illustrated by block 650 of Figure 2A-C, the first SCP node 10 determines that a reselection is needed based on the error. That is, the first SCP node 10 identifies that an alternative NF node of the service producer needs to be selected. As illustrated by block 652 of Figure 2A-C, the first SCP node 10 selects an alternative NF node of the service producer from the discovered results (e.g. based on parameters, such as set belonging, locality, etc.). For the purpose of the illustration, it is assumed that the first SCP node 10 selects the third NF node 70.

As illustrated by arrow 654 of Figure 2A-C, the first SCP node 10 initiates transmission of the service request towards the selected third NF node 70. As illustrated by arrow 656 of Figure 2A-C, there is a lack of response from the third NF node 70. It may be that there are a limited number of NF nodes of the service producer available and/or the first SCP node 10 may be restricted to a maximum number of reselection attempts. The first SCP node 10 is unable to proceed with the service request. Thus, as illustrated by arrow 658 of Figure 2A-C, if no response is received by the first SCP node 10, the first SCP node 10 initiates transmission of a response to the first NF node 20. The response comprises information (e.g. an existing HTTP error, such as a 504 error) indicative that there is an error situation. Regardless of the error sent back, the first NF node 20 delegated reselection to the first SCP node 10. Thus, as illustrated by block 660 of Figure 2A-C, the procedure fails.

Thus, even though NF nodes (e.g. the second NF node 30 and/or third NF node 70) of the service producer may be available and operational (e.g. up and running), the procedure can still fail, for example, due to an SCP connectivity issue. A redundant SCP deployment will be common in most cases.

S2-1901765 "Discussion of SCP Deployment Scenarios" discloses deployment scenarios of multiple SCPs.

### Summary

It is an object of the disclosure to obviate or eliminate at least some of the above-described disadvantages associated with existing techniques.

The invention is defined by the appended independent claims. Further embodiments are defined by the appended dependent claims.

Thus, an improved technique for handling service requests in a network is provided.

### Brief description of the drawings

For a better understanding of the technique, and to show how it may be put into effect, reference will now be made, by way of example, to the accompanying drawings, in which:
Figure 1A-D is a block diagram illustrating different existing systems;
Figure 2A-C is a signalling diagram illustrating an exchange of signals in an existing system;
Figure 3 is a block diagram illustrating a first service communication proxy (SCP) node according to an embodiment;
Figure 4 is a flowchart illustrating a method performed by a first SCP node according to an embodiment;
Figure 5 is a block diagram illustrating a second SCP node according to an embodiment;
Figure 6 is a flowchart illustrating a method performed by a second SCP node according to an embodiment;
Figure 7A-D is a signalling diagram illustrating an exchange of signals in a system according to an embodiment;
Figure 8 is a block diagram illustrating a first SCP node according to an embodiment; and
Figure 9 is a block diagram illustrating a second SCP node according to an embodiment.

### Detailed Description

Herein, techniques for handling a service request in a network are described. A service request can also be referred to as a request for a service. Generally, a service is software intended to be managed for users. Herein, a service can be any type of service, such as a communication service (e.g. a notification service or a callback service), a context management (e.g. user equipment context management (UECM)) service, a data management (DM) service, or any other type of service. The techniques described herein can be used in respect of any network, such as any communications or telecommunications network, e.g. cellular network. The network may be a fifth generation (5G) network or any other generation network. In some embodiments, the network may be a core network or a radio access network (RAN). The techniques described herein are implemented by a first service communication proxy (SCP) node and a second SCP node.

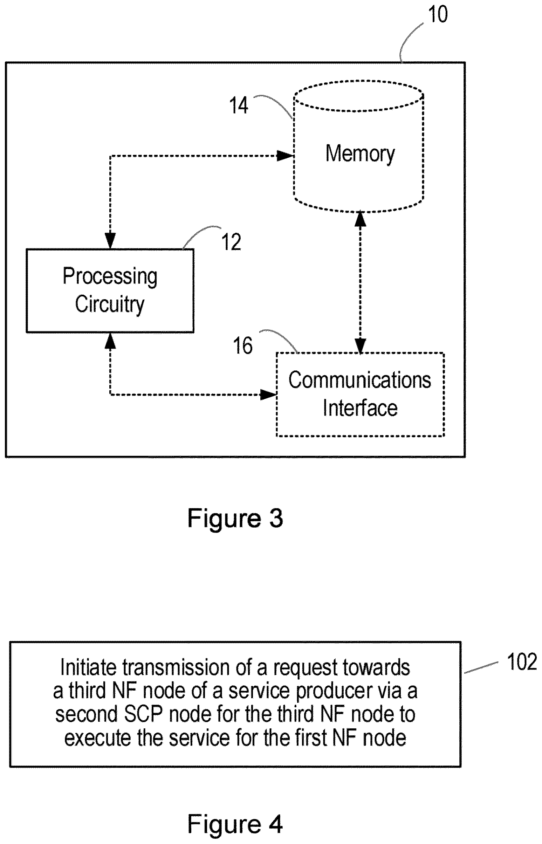

**Figure 3** illustrates a first SCP node 10 in accordance with an embodiment. The first SCP node 10 is for handling a service request in a network. The first SCP node 10 is configured to operate as an SCP between a first NF node of a service consumer and a second NF node of a service producer in the network. In some embodiments, the first SCP node 10 can be, for example, be a physical machine (e.g. a server) or a virtual machine (VM). In some embodiments, the first NF node can be, for example, be a physical machine (e.g. a server) or a virtual machine (VM). The first NF node can be, for example, a user equipment (UE).

An NF is a third generation partnership project (3GPP) adopted or 3GPP defined processing function in a network, which has defined functional behaviour and 3GPP defined interfaces. An NF can be implemented either as a network element on a dedicated hardware, as a software instance running on a dedicated hardware, or as a virtualised function instantiated on an appropriate platform, e.g. on a cloud infrastructure. Herein, the term "node" in relation to an "NF node" will be understood to cover each of these scenarios.

As illustrated in Figure 3, the first SCP node 10 comprises processing circuitry (or logic) 12. The processing circuitry 12 controls the operation of the first SCP node 10 and can implement the method described herein in respect of the first SCP node 10. The processing circuitry 12 can be configured or programmed to control the first SCP node 10 in the manner described herein. The processing circuitry 12 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the first SCP node 10. In some embodiments, the processing circuitry 12 can be configured to run software to perform the method described herein in respect of the first SCP node 10. The software may be containerised according to some embodiments. Thus, in some embodiments, the processing circuitry 12 may be configured to run a container to perform the method described herein in respect of the first SCP node 10.

Briefly, the processing circuitry 12 of the first SCP node 10 is configured to, if no positive response is received from a second NF node of a service producer to a first request, initiate transmission of the first request towards a third NF node of a service producer via a second SCP node. The first request is transmitted towards the second NF node via the first SCP node 10 and is for the second NF node to execute (or provide) a service requested by the first NF node. The first request is transmitted towards the third NF node for the third NF node to execute (or provide) the service. The second SCP node is configured to operate as an SCP between the first NF node and the third NF node in the network. The second SCP node is a different SCP node to the first SCP node.

As illustrated in Figure 3, in some embodiments, the first SCP node 10 may optionally comprise a memory 14. The memory 14 of the first SCP node 10 can comprise a volatile memory or a non-volatile memory. In some embodiments, the memory 14 of the first SCP node 10 may comprise a non-transitory media. Examples of the memory 14 of the first SCP node 10 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 12 of the first SCP node 10 can be connected to the memory 14 of the first SCP node 10. In some embodiments, the memory 14 of the first SCP node 10 may be for storing program code or instructions which, when executed by the processing circuitry 12 of the first SCP node 10, cause the first SCP node 10 to operate in the manner described herein in respect of the first SCP node 10. For example, in some embodiments, the memory 14 of the first SCP node 10 may be configured to store program code or instructions that can be executed by the processing circuitry 12 of the first SCP node 10 to cause the first SCP node 10 to operate in accordance with the method described herein in respect of the first SCP node 10. Alternatively or in addition, the memory 14 of the first SCP node 10 can be configured to store any information, data, messages, requests, responses, indications, notifications, signals, or similar, that are described herein. The processing circuitry 12 of the first SCP node 10 may be configured to control the memory 14 of the first SCP node 10 to store information, data, messages, requests, responses, indications, notifications, signals, or similar, that are described herein.

In some embodiments, as illustrated in Figure 3, the first SCP node 10 may optionally comprise a communications interface 16. The communications interface 16 of the first SCP node 10 can be connected to the processing circuitry 12 of the first SCP node 10 and/or the memory 14 of first SCP node 10. The communications interface 16 of the first SCP node 10 may be operable to allow the processing circuitry 12 of the first SCP node 10 to communicate with the memory 14 of the first SCP node 10 and/or vice versa. Similarly, the communications interface 16 of the first SCP node 10 may be operable to allow the processing circuitry 12 of the first SCP node 10 to communicate with the second SCP node and/or any other node. The communications interface 16 of the first SCP node 10 can be configured to transmit and/or receive information, data, messages, requests, responses, indications, notifications, signals, or similar, that are described herein. In some embodiments, the processing circuitry 12 of the first SCP node 10 may be configured to control the communications interface 16 of the first SCP node 10 to transmit and/or receive information, data, messages, requests, responses, indications, notifications, signals, or similar, that are described herein.

Although the first SCP node 10 is illustrated in Figure 3 as comprising a single memory 14, it will be appreciated that the first SCP node 10 may comprise at least one memory (i.e. a single memory or a plurality of memories) 14 that operate in the manner described herein. Similarly, although the first SCP node 10 is illustrated in Figure 3 as comprising a single communications interface 16, it will be appreciated that the first SCP node 10 may comprise at least one communications interface (i.e. a single communications interface or a plurality of communications interface) 16 that operate in the manner described herein. It will also be appreciated that Figure 3 only shows the components required to illustrate an embodiment of the first SCP node 10 and, in practical implementations, the first SCP node 10 may comprise additional or alternative components to those shown.

**Figure 4** is a flowchart illustrating a method performed by a first SCP node 10 in accordance with an embodiment. The first SCP node 10 is configured to operate as an SCP between a first NF node of a service consumer and a second NF node of a service producer in the network. The method of Figure 4 is for handling a service request in the network. The first SCP node 10 described earlier with referenced to Figure 3 is configured to operate in accordance with the method of Figure 4. The method can be performed by or under the control of the processing circuitry 12 of the first SCP node 10.

The method of Figure 4 is performed if no positive response is received from the second NF node to a first request transmitted towards the second NF node via the first SCP node. The first request is for the second NF node to execute (or provide) a service requested by the first NF node. As illustrated at block 102 of Figure 4, transmission of the first request is initiated towards a third NF node of a service producer via a second SCP node for the third NF node to execute (or provide) the service. The second SCP node is configured to operate as an SCP between the first NF node and the third NF node in the network. The second SCP node is a different SCP node to the first SCP node.

Herein, any references to "no positive response" being received can be understood to mean that no response is received at all (i.e. there is a lack of, or absence of, any response) or that an error (e.g. an error code) is received. The fact that no positive response is received can mean that the corresponding request to execute a service is not served, e.g. is not executed or not executed successfully. In this case, there may be a failure between the SCP node that initiated transmission of the request and the NF node of the service producer towards which the request is transmitted. On the other hand, a positive response may be received where the corresponding request to execute a service can be served, e.g. can be executed successfully. In this case, there may be no failure between the SCP node that initiated transmission of the request and the NF node of the service producer towards which the request is transmitted.

Herein, the term "initiate" can mean, for example, cause or establish. Thus, the processing circuitry 12 of the first SCP node 10 can be configured to itself transmit the first request (e.g. via a communications interface 16 of the first SCP node 10) or can be configured to cause another node to transmit the first request. In some embodiments, the first request can be a hypertext transfer protocol (HTTP) request.

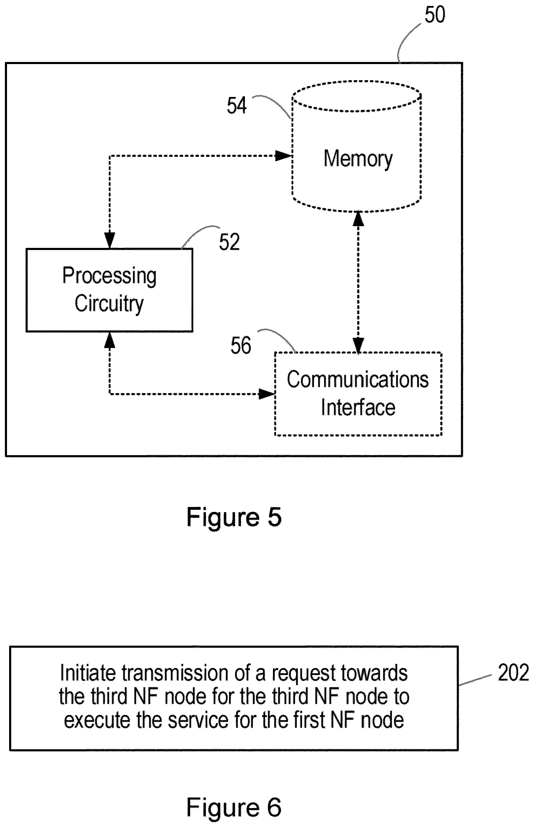

**Figure 5** illustrates a second SCP node 50 in accordance with an embodiment. The second SCP node 50 is for handling a service request in a network. The second SCP node 50 is configured to operate as an SCP between a first NF node of a service consumer and a second NF node of a service producer in the network. In some embodiments, the second SCP node 50 can be, for example, be a physical machine (e.g. a server) or a virtual machine (VM).

As illustrated in Figure 5, the second SCP node 50 comprises processing circuitry (or logic) 52. The processing circuitry 52 controls the operation of the second SCP node 50 and can implement the method described herein in respect of the second SCP node 50. The processing circuitry 52 can be configured or programmed to control the second SCP node 50 in the manner described herein. The processing circuitry 52 can comprise one or more hardware components, such as one or more processors, one or more processing units, one or more multi-core processors and/or one or more modules. In particular implementations, each of the one or more hardware components can be configured to perform, or is for performing, individual or multiple steps of the method described herein in respect of the second SCP node 50. In some embodiments, the processing circuitry 52 can be configured to run software to perform the method described herein in respect of the second SCP node 50. The software may be containerised according to some embodiments. Thus, in some embodiments, the processing circuitry 52 may be configured to run a container to perform the method described herein in respect of the second SCP node 50.

Briefly, the processing circuitry 52 of the second SCP node 50 is configured to, if no positive response is received from a second NF node of a service producer to a first request, initiate transmission of the first request towards a third NF node of a service producer via a second SCP node. The first request is transmitted towards the second NF node via the second SCP node 50 and is for the second NF node to execute (or provide) a service requested by the first NF node. The first request is transmitted towards the third NF node for the third NF node to execute (or provide) the service. The second SCP node is configured to operate as an SCP between the first NF node and the third NF node in the network. The second SCP node is a different SCP node to the first SCP node.

As illustrated in Figure 5, in some embodiments, the second SCP node 50 may optionally comprise a memory 54. The memory 54 of the second SCP node 50 can comprise a volatile memory or a non-volatile memory. In some embodiments, the memory 54 of the second SCP node 50 may comprise a non-transitory media. Examples of the memory 54 of the second SCP node 50 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 52 of the second SCP node 50 can be connected to the memory 54 of the second SCP node 50. In some embodiments, the memory 54 of the second SCP node 50 may be for storing program code or instructions which, when executed by the processing circuitry 52 of the second SCP node 50, cause the second SCP node 50 to operate in the manner described herein in respect of the second SCP node 50. For example, in some embodiments, the memory 54 of the second SCP node 50 may be configured to store program code or instructions that can be executed by the processing circuitry 52 of the second SCP node 50 to cause the second SCP node 50 to operate in accordance with the method described herein in respect of the second SCP node 50. Alternatively or in addition, the memory 54 of the second SCP node 50 can be configured to store any information, data, messages, requests, responses, indications, notifications, signals, or similar, that are described herein. The processing circuitry 52 of the second SCP node 50 may be configured to control the memory 54 of the second SCP node 50 to store information, data, messages, requests, responses, indications, notifications, signals, or similar, that are described herein.

In some embodiments, as illustrated in Figure 5, the second SCP node 50 may optionally comprise a communications interface 56. The communications interface 56 of the second SCP node 50 can be connected to the processing circuitry 52 of the second SCP node 50 and/or the memory 54 of second SCP node 50. The communications interface 56 of the second SCP node 50 may be operable to allow the processing circuitry 52 of the second SCP node 50 to communicate with the memory 54 of the second SCP node 50 and/or vice versa. Similarly, the communications interface 56 of the second SCP node 50 may be operable to allow the processing circuitry 52 of the second SCP node 50 to communicate with the first SCP node 10 and/or any other node. The communications interface 56 of the second SCP node 50 can be configured to transmit and/or receive information, data, messages, requests, responses, indications, notifications, signals, or similar, that are described herein. In some embodiments, the processing circuitry 52 of the second SCP node 50 may be configured to control the communications interface 56 of the second SCP node 50 to transmit and/or receive information, data, messages, requests, responses, indications, notifications, signals, or similar, that are described herein.

Although the second SCP node 50 is illustrated in Figure 5 as comprising a single memory 54, it will be appreciated that the second SCP node 50 may comprise at least one memory (i.e. a single memory or a plurality of memories) 54 that operate in the manner described herein. Similarly, although the second SCP node 50 is illustrated in Figure 5 as comprising a single communications interface 56, it will be appreciated that the second SCP node 50 may comprise at least one communications interface (i.e. a single communications interface or a plurality of communications interface) 56 that operate in the manner described herein. It will also be appreciated that Figure 5 only shows the components required to illustrate an embodiment of the second SCP node 50 and, in practical implementations, the second SCP node 50 may comprise additional or alternative components to those shown.

**Figure 6** is a flowchart illustrating a method performed by a second SCP node 50 in accordance with an embodiment. The second SCP node 50 is configured to operate as an SCP between a first NF node of a service consumer and a third NF node of a service producer in the network. The method of Figure 6 is for handling a service request in the network. The second SCP node 50 described earlier with referenced to Figure 5 is configured to operate in accordance with the method of Figure 6. The method can be performed by or under the control of the processing circuitry 52 of the second SCP node 50.

The method of Figure 6 is performed in response to receiving a first request for the third NF node to execute (or provide) a service requested by the first NF node. The transmission of the first request is initiated from a first SCP node 10 that is configured to operate as an SCP between the first NF node and a second NF node. As illustrated at block 202 of Figure 6, transmission of the first request is initiated towards the third NF node for the third NF node to execute (or provide) the service. The second SCP node 50 is a different SCP node to the first SCP node 10.

There is also provided a system. The system can comprise at least one first SCP node 10 as described herein and/or at least one second SCP node 50 as described herein. The system may also comprise any one or more of the other nodes mentioned herein.

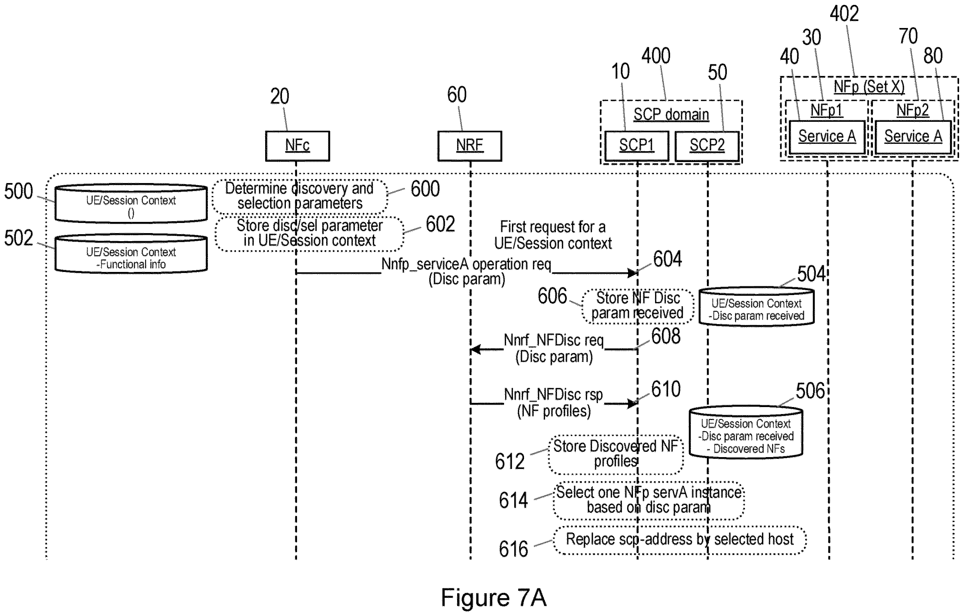

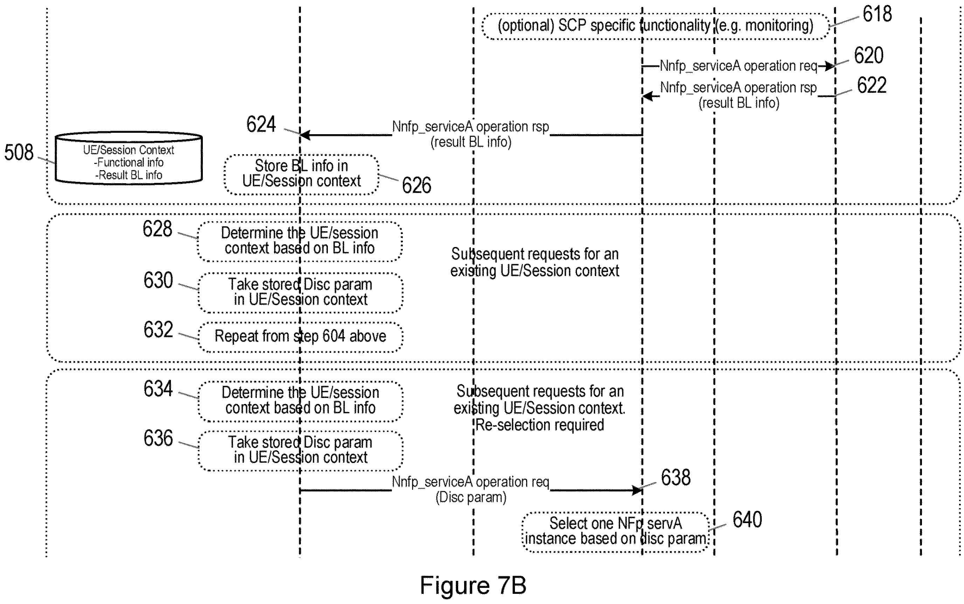

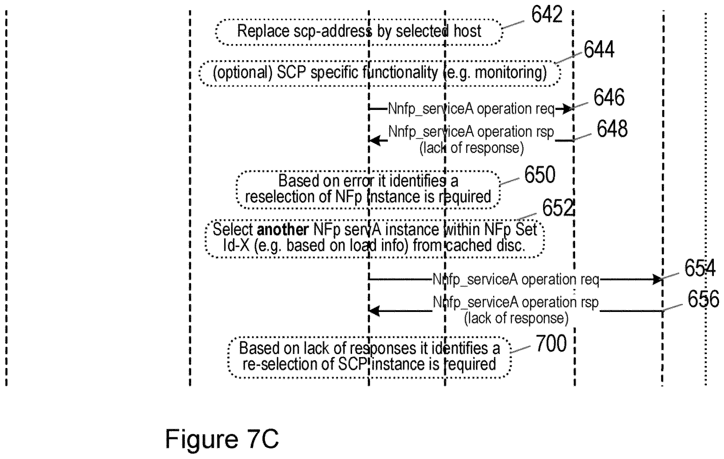

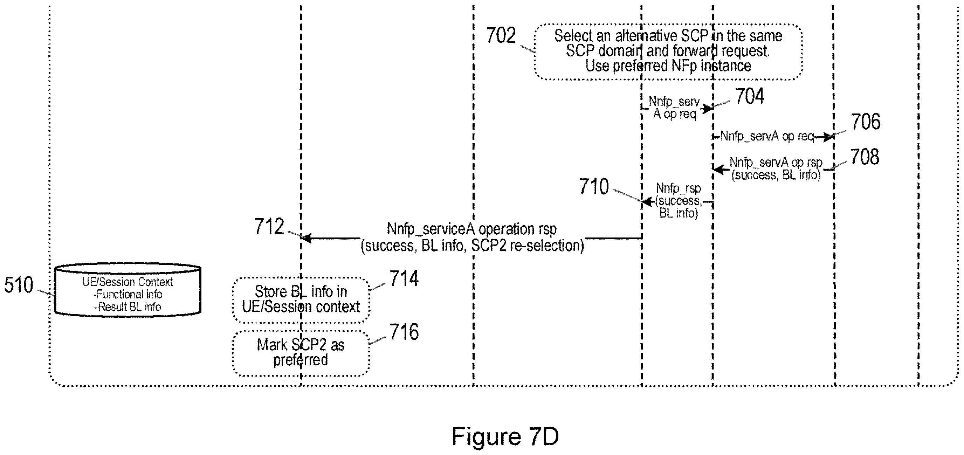

**Figure 7A-D** is a signalling diagram illustrating an exchange of signals in a system according to an embodiment. The system illustrated in Figure 7A-D comprises a first SCP node 10 and a second SCP node 50. In the system illustrated in Figure 7A-D, the second SCP node 50 is an SCP node that is in the same SCP domain 400 as the first SCP node 10. The second SCP node 50 is a different SCP node to the first SCP node 10. The first SCP node 10 can be as described earlier with reference to Figures 3 and 4. The second SCP node 50 can be as described earlier with reference to Figures 5 and 6.

The system illustrated in Figure 7A-D comprises a first NF node 20 of a service consumer ("NFc"), a second NF node 30 of a service producer ("NFp1"), and a third NF node 70 of a service producer ("NFp2"). The first SCP node 10 is configured to operate as an SCP between the first NF node 20 and the second NF node 30. The second SCP node 50 is configured to operate as an SCP between the first NF node 20 and a third NF node 30, 70 of a service producer, which may be the second NF node 30 or another NF node 70 of a service producer. The second NF node 30 and this third NF node 30 may thus be the same NF node, or the second NF node 30 and this third NF node 70 may be different NF nodes.

The second NF node 30 can be configured to run (or provide) a service 40. The third NF node 70 can be configured to run (or provide) a service 80. The second NF node 30 and the third NF node 70 can be configured to run (or provide) the same service or a different service. The second NF node 30 and the third NF node 70 can be part of a set (or group) 402 of NF nodes of a service producer. The system illustrated in Figure 7A-D comprises a network repository function 60. In some embodiments, an entity may comprise the NRF 60 and one or both of the first SCP node 10 and the second SCP node 50. That is, in some embodiments, the first SCP node 10 and/or the second SCP node 50 can be merged with the NRF 60 in a combined entity.

In some embodiments, the first SCP node 10 and the first NF node 20 may be deployed in independent deployment units, the first SCP node 10 and the second NF node 30 may be deployed in independent deployment units, and/or the first SCP node 10 and the third NF node may be deployed in independent deployment units. Thus, a first SCP node 10 based on independent deployment units is possible, as described in 3GPP TS 23.501 V16.4.0. In other embodiments, the first SCP node 10 may be deployed as a distributed network element. For example, in some embodiments, part (e.g. a service agent) of the first SCP node 10 may be deployed in the same deployment unit as the first NF node 20, part (e.g. a service agent) of the first SCP node 10 may be deployed in the same deployment unit as the second NF node 30, and/or part of the first SCP node 10 may be deployed in the same deployment unit as the third NF node. Thus, a first SCP node 10 based on service mesh is possible, as described in 3GPP TS 23.501 V16.4.0.

In some embodiments, the second SCP node 50 and the first NF node 20 may be deployed in independent deployment units, the second SCP node 50 and the second NF node 30 may be deployed in independent deployment units, and/or the second SCP node 50 and the third NF node may be deployed in independent deployment units. Thus, a second SCP node 50 based on independent deployment units is possible, as described in 3GPP TS 23.501 V16.4.0. In other embodiments, the second SCP node 50 may be deployed as a distributed network element. For example, in some embodiments, part (e.g. a service agent) of the second SCP node 50 may be deployed in the same deployment unit as the first NF node 20, part (e.g. a service agent) of the second SCP node 50 may be deployed in the same deployment unit as the second NF node 30, and/or part of the second SCP node 50 may be deployed in the same deployment unit as the third NF node. Thus, a second SCP node 50 based on service mesh is possible, as described in 3GPP TS 23.501 V16.4.0.

In some embodiments, at least one third SCP node may be configured to operate as an SCP between the first SCP node 10 and the second NF node 30 and/or at least one fourth SCP node may be configured to operate as an SCP between the first NF node 20 and the first SCP node 10. The at least one third SCP node is a different SCP node to the second SCP node 50. The at least one fourth SCP node is a different SCP node to the second SCP node 50. Thus, a multipath of SCP nodes is possible. In some of these embodiments, the at least one third SCP node and/or the at least one fourth SCP node may be deployed in independent deployment units. In some embodiments, the at least one third SCP node and/or the at least one fourth SCP node may be deployed as distributed network elements.

Steps 500-508 and 600-656 of are as described earlier with reference to Figure 2A-C. As illustrated by arrow 700 of Figure 7A-D, if no positive response is received from the second NF node 30 to the first request transmitted towards the second NF node 30 via the first SCP node 10, based on this lack of positive response (e.g. no response at all or an error response), the first SCP node 10 can identify that reselection of an SCP node is required. That is, the first SCP node 10 can identify that the first request is to be transmitted via a different SCP node. In some embodiments, the method may be performed if no positive response is received from the second NF node 30 to a first request transmitted towards at least two second NF nodes 30) via the first SCP node 10. Thus, the first SCP node 10 may identify that reselection of an SCP node is required after a lack of positive response (e.g. no response at all or an error response) from one or a plurality of NF nodes of a service provider.

As illustrated by block 702, the first SCP node 10 selects an alternative SCP node. That is, the first SCP node 10 is able to select an alternative SCP node instead of continually trying to reach another NF node of the service producer via the same first SCP node 10, which may cause a request failure or even multiple requests failures, depending on the available NF nodes of the service producer. Having the ability to select an alternative SCP node prevents the first SCP node 10 from continually selecting (in a loop) NF nodes of the service producer all with same wrong results and also prevents the first SCP node 10 from having to abort the procedure. Thus, providing the first SCP node 10 with the ability to select an alternative SCP node provides advantageous results in that service requests are more likely to be executed successfully.

For the purpose of this illustration, the first SCP node 10 is assumed to select the second SCP node 50 as the alternative. As illustrated in Figure 7A-D, the second SCP node 50 is an SCP node that is in the same SCP domain 400 as the first SCP node 10. This means that the second SCP node 50 is able to reach (or capable of reaching) the same NF nodes (e.g. the second NF node 30) as the first SCP node 10. Generally, an SCP domain is a group of one or more SCPs that can reach certain NF nodes (or NF node instances) or SCPs directly, i.e. without passing through an intermediate SCP.

As illustrated by arrow 704 of Figure 7A-D, the first SCP node 10 initiates transmission of the first request towards a third NF node of a service producer via the second SCP node 50 for the third NF node to execute (or provide) the service 40. Thus, if no positive response is received from the second NF node 30 to a first request transmitted towards the second NF node 30 via the first SCP node 10, the first SCP node 10 initiated transmission of this first request towards the third NF node via the second SCP node 50. That is, the first request is forwarded via the second SCP node 50. The second NF node 30 and the third NF node may be the same NF node (i.e. the third NF node may be the same as the last NF node), or the second NF node 30 and the third NF node may be different NF nodes. In some embodiments, the third NF node may be a preferred NF node. For the purpose of the illustration, it is assumed that the second NF node 30 and the third NF node are the same NF node. That is, the first SCP node 10 initiates transmission of the first request towards the same second NF node 30 via the second SCP node 50.

In some embodiments, initiating transmission of the first request towards the third NF node via the second SCP node 50 may comprise initiating transmission of the first request towards the third NF node via the second SCP node 50 with information identifying the third NF node. In this way, the second SCP node 50 is able to identify the final destination for the first request in order to send it there. In some embodiments, the information identifying the third NF node can be included in a header of the first request, e.g. an existing header 3gpp-sbi-target-apiroot may be used. The first SCP node 10 may use the address of the second SCP node 50 in an Application Programming Interface (API) root of the first request.

In some embodiments, the first SCP node 10 may initiate transmission of the first request towards the third NF node (which in this illustration is the same second NF node 30) via the second SCP node 50 (e.g. only) if no positive response is received from the second NF node 30 to the first request due to the first SCP node 10 failing to connect to the second NF node 30. Although not illustrated in Figure 7A-D, in some embodiments, the first SCP node 10 may check whether the first SCP node 10 failed to connect to the second NF node 30. The first SCP node 10 failing to connect to the second NF node 30 can be the first SCP node 10 itself failing to connect to the second NF node 30 or at least one third SCP node failing to connect to the second NF node 30, where the at least one third SCP node is configured to operate as an SCP between the first SCP node 10 and the second NF node 30.

In some embodiments, checking whether the at least one third SCP node failed to connect to the second NF node 30 may comprise checking a status of the at least one third SCP node to identify whether the at least one third SCP node failed to connect to the second NF node 30. For example, the status may be checked with the at least one third SCP node or the NRF 60. In some embodiments, checking the status with the at least one third SCP node may comprise initiating transmission of a second request towards the third SCP node, where the second request is a request for the status of the third SCP node. In these embodiments, if no positive response to the second request is received from the third SCP node, the third SCP node failed to connect to the second NF node 30. On the other hand, if a positive response to the second request is received from the third SCP node, the third SCP node succeeded to connect to the second NF node 30. The second request may, for example, be a HTTP request, such as a HTTP ping request or a HTTP head request.

Alternatively or in addition, in some embodiments, the first SCP node 10 may initiate transmission of the first request towards the third NF node (which in this illustration is the same second NF node 30) via the second SCP node 50 (e.g. only) if the second NF node 30 is operative. Although not illustrated in Figure 7A-D, in some embodiments, the first SCP node 10 may check whether the second NF node 30 is operative. In some embodiments, checking whether the second NF node 30 is operative may comprise checking a status of the second NF node 30 to identify whether the second NF node 30 is operative. For example, the status may be checked with the second NF node 30 or the NRF 60.

In some embodiments, checking the status with the second NF node 30 may comprise initiating transmission of a third request towards the second NF node 30, where the third request is a request for the status of the second NF node 30. In these embodiments, if a positive response to the third request is received from the second NF node 30, the second NF node 30 is operative. On the other hand, if no positive response to the third request is received from the second NF node 30, the second NF node 30 is inoperative. The third request may, for example, be a HTTP, request, such as a HTTP ping request or a HTTP head request.

The second SCP node 50 receives the first request for the third NF node (which in this illustration is the same second NF node 30) to execute (or provide) a service 40 requested by the first NF node 20. That is, the second SCP node 50 receives the first request forwarded from the first SCP node 10. Returning back to Figure 7A-D, as illustrated by arrow 706, in response to receiving the first request for the third NF node (which in this illustration is the same second NF node 30) to execute (or provide) a service 40 requested by the first NF node 20, the second SCP node 50 initiates transmission of the first request towards the third NF node (which in this illustration is the same second NF node 30) for the third NF node to execute (or provide) the service 40. As illustrated by arrow 708 of Figure 7A-D, some embodiments, the third NF node (which in this illustration is the same second NF node 30) may initiate transmission of a response towards the second SCP node 50 indicative that the first request is executed successfully. The response may comprise some business logic (BL) information, e.g. as a result of the service execution.

As illustrated by arrow 710 of Figure 7A-D, in some embodiments, the second SCP node 50 may initiate transmission of the response indicative that the first request is executed successfully to the first SCP node 10. Thus, in some embodiments, the first SCP node 10 can receive a response to the first request from the third NF node (which in this illustration is the same second NF node 30) via the second SCP node 50. The first request may be executed successfully, for example, where the first SCP node 10 suffers a connectivity issue (e.g. outside the SCP domain) that the second SCP node 50 does not.

As illustrated by arrow 712 of Figure 7A-D, in some embodiments, the first SCP node 10 may initiate transmission of the response indicative that the first request is executed successfully to the first NF node 20. In some embodiments, the response may comprise information indicative that the first SCP node 10 initiated transmission of the first request towards the third NF node via another SCP node (e.g. an indication of the forwarding performed), or information indicative that the first SCP node 10 initiated transmission of the first request towards the third NF node via the second SCP node 50 (e.g. an indication that the destination is reached due to a redirection via the second SCP node 50). As illustrated by blocks 510 and 714 of Figure 7A-D, in some embodiments, the first NF node 20 may store the response. As illustrated by block 716 of Figure 7A-D, in some embodiments, the first NF node 20 may mark the second SCP node 50 as the preferred SCP node for subsequent service requests. In other embodiments, another SCP node may be chosen as the preferred SCP node for subsequent service requests, such as another SCP node in the same domain.

Although not illustrated in Figure 7A-D, in some embodiments, the first SCP node 10 may initiate transmission of one or more subsequent first requests for the execution of a service 40, where the transmission of the one or more subsequent first requests is initiated towards the third NF node via the second SCP node 50 or via a fifth SCP node for the third NF node to execute (or provide) the service 40. The fifth SCP node is a different SCP node to the second SCP node 50. In some embodiments, the fifth SCP node may be in the same SCP domain as the second SCP node 50.

In some embodiments, the transmission of the one or more subsequent first requests may be initiated towards the third NF node via the second SCP node 50 if the second SCP node 50 is marked at the first NF node 20 as a preferred SCP node for subsequent first requests or as having a highest priority for subsequent first requests. Alternatively, the transmission of the one or more subsequent first requests may be initiated towards the third NF node via the fifth SCP node if the fifth SCP node is marked at the first NF node 20 as a preferred SCP node for subsequent first requests or as having a highest priority for subsequent first requests.

Thus, in some embodiments, the second SCP node 50 may receive one or more subsequent first requests for the execution of a service 40. In some embodiments, the second SCP node 50 may initiate transmission of the one or more subsequent first requests towards the third NF node for the third NF node to execute (or provide) the service 40. In some embodiments, the first SCP node 10 may avoid initiating transmission of the one or more subsequent first requests towards the third NF node via the first SCP node 10 if the first SCP node is marked at the first NF node 20 as not preferred for subsequent first requests or as not having a highest priority for subsequent first requests. The first SCP node 10 may be only temporarily marked at the first NF node 20 as not preferred for subsequent first requests or as not having a highest priority for subsequent first requests.

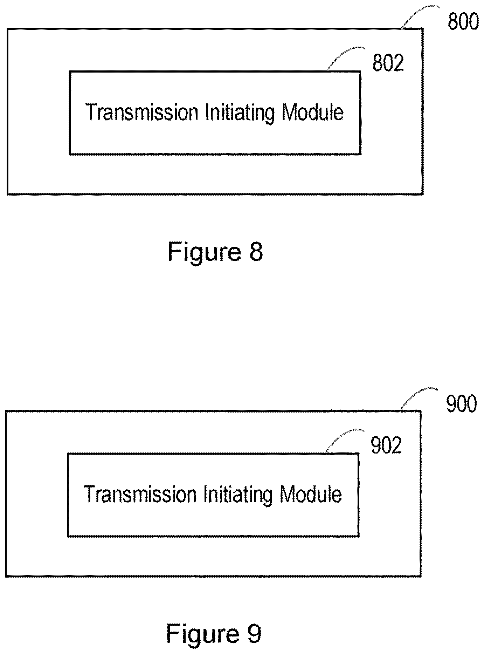

**Figure 8** is a block diagram illustrating a first SCP node 800 in accordance with an embodiment. The first SCP node 800 can handle a service request in a network. The first SCP node 800 can operate as an SCP between a first NF node of a service consumer and a second NF node of a service producer in the network. The first SCP node 800 comprises a transmission initiating module 802 configured to, if no positive response is received from the second NF node to a first request transmitted towards the second NF node via the first SCP node 800 (where the first request is for the second NF node to execute a service requested by the first NF node), initiate transmission of the first request towards a third NF node of a service producer via a second SCP node for the third NF node to execute the service. The second SCP node can operate as an SCP between the first NF node and the third NF node in the network. The second SCP node is a different SCP node to the first SCP node8700. The first SCP node 800 may operate in the manner described herein in respect of the first SCP node.

**Figure 9** is a block diagram illustrating a second SCP node 900 in accordance with an embodiment. The second SCP node 900 can handle a service request in a network. The second SCP node 900 can operate as an SCP between a first NF node of a service consumer and a third NF node of a service producer in the network. The second SCP node 900 comprises a first transmission initiating module 902 configured to, in response to receiving a first request for the third NF node to execute a service requested by the first NF node (where transmission of the first request is initiated from a first SCP node 800 that is configured to operate as an SCP between the first NF node and a second NF node), initiate transmission of the first request towards the third NF node for the third NF node to execute the service. The second SCP node 900 is a different SCP node to the first SCP node 800. The second SCP node 900 may operate in the manner described herein in respect of the second SCP node.

There is also provided a computer program comprising instructions which, when executed by processing circuitry (such as the processing circuitry 12 of the first SCP node 10 described earlier and/or the processing circuitry 52 of the second SCP node 50 described earlier), cause the processing circuitry to perform at least part of the method described herein. There is provided a computer program product, embodied on a non-transitory machine-readable medium, comprising instructions which are executable by processing circuitry (such as the processing circuitry 12 of the first SCP node 10 described earlier and/or the processing circuitry 52 of the second SCP node 50 described earlier) to cause the processing circuitry to perform at least part of the method described herein. There is provided a computer program product comprising a carrier containing instructions for causing processing circuitry (such as the processing circuitry 12 of the first SCP node 10 described earlier and/or the processing circuitry 52 of the second SCP node 50 described earlier) to perform at least part of the method described herein. In some embodiments, the carrier can be any one of an electronic signal, an optical signal, an electromagnetic signal, an electrical signal, a radio signal, a microwave signal, or a computer-readable storage medium.

In some embodiments, the first SCP node functionality and/or the second SCP node functionality described herein can be performed by hardware. Thus, in some embodiments, any one or more of the first SCP node 10 and the second SCP node 50 described herein can be a hardware node. However, it will also be understood that optionally at least part or all of the first SCP node functionality and/or the second SCP node functionality described herein can be virtualized. For example, the functions performed by any one or more of the first SCP node 10 and the second SCP node 50 described herein can be implemented in software running on generic hardware that is configured to orchestrate the node functionality. Thus, in some embodiments, any one or more of the first SCP node 10 and the second SCP node 50 described herein can be a virtual node. In some embodiments, at least part or all of the first SCP node functionality and/or the second SCP node functionality described herein may be performed in a network enabled cloud. The first SCP node functionality and/or the second SCP node functionality described herein may all be at the same location or at least some of the node functionality may be distributed.

It will be understood that at least some or all of the method steps described herein can be automated in some embodiments. That is, in some embodiments, at least some or all of the method steps described herein can be performed automatically. The method described herein can be a computer-implemented method.

Thus, in the manner described herein, there is advantageously provided an improved technique for handling service requests in a network. A first SCP node 10 having a connectivity issue (e.g. outside its SCP domain) can forward a service request to a second SCP node (e.g. in the same SCP domain) to overcome the connectivity issue. The first NF node 20 of the service consumer that made the request may be updated of the need to reselect an alternative SCP node. The forwarding of the service request to another SCP node for it to be transmitted again but this time by a different SCP node avoids the need for the original SCP node to unsuccessfully keep trying to transmit the service request and also avoids the method simply failing.

It should be noted that the above-mentioned embodiments illustrate rather than limit the idea, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method for handling a service request in a network, wherein the method is performed by a first service communication proxy, SCP, node (10) that is configured to operate as an SCP between a first network function, NF, node (20) of a service consumer and a second NF node (30) of a service producer in the network, the method comprising:
initiating (102, 704, 706) transmission of a first request towards a third NF node of a service producer via a second SCP node (50) if no positive response is received from the second NF node (30) to the first request (638, 654) transmitted towards the second NF node (30) via the first SCP node (10),
wherein the first request (638, 654) is transmitted towards the second NF node (30) for the second NF node (30) to execute a service (40) requested by the first NF node (20) and transmission of the first request is initiated towards the third NF node for the third NF node to execute the service (40), wherein the second SCP node (50) is configured to operate as an SCP between the first NF node (20) and the third NF node in the network, and wherein the second SCP node (50) is a different SCP node to the first SCP node (10).

2. A method as claimed in claim 1, the method comprising:
identifying (700) that the first request is to be transmitted via a different SCP node; and/or
selecting (702) the second SCP node (50).

3. A method as claimed in claim 1 or 2, wherein:
the second SCP node (50) is an SCP node that is in the same SCP domain as the first SCP node (10);
transmission of the first request towards the third NF node via the second SCP node (50) is initiated if no positive response is received from the second NF node (30) to the first request due to the first SCP node (10) failing to connect to the second NF node (30); and/or
the method comprises checking whether the first SCP node (10) failed to connect to the second NF node (30) and/or checking whether the second NF node (30) is operative.

4. A method as claimed in claim 3, wherein:
the first SCP node (10) failing to connect to the second NF node (30) is:
the first SCP node (10) itself failing to connect to the second NF node (30); or
at least one third SCP node failing to connect to the second NF node (30), wherein the at least one third SCP node is configured to operate as an SCP between the first SCP node (10) and the second NF node (30).

5. A method as claimed in claim 4, the method comprising:
checking a status of the at least one third SCP node to identify whether the at least one third SCP node failed to connect to the second NF node (30).

6. A method as claimed in claim 5, wherein:
the status is checked with the at least one third SCP node or a network repository function, NRF (60).

7. A method as claimed in claim 6, wherein:
checking the status with the at least one third SCP node comprises:
initiating transmission of a second request towards the third SCP node, wherein the second request is a request for the status of the third SCP node,
wherein:
the second request is a hypertext transfer protocol, HTTP, ping request or a HTTP head request; and/or
if no positive response to the second request is received from the third SCP node, the third SCP node failed to connect to the second NF node (30); or
if a positive response to the second request is received from the third SCP node, the third SCP node succeeded to connect to the second NF node (30).

8. A method as claimed in any of claims 3 to 7, wherein:
checking whether the second NF node (30) is operative comprises:
checking a status of the second NF node (30) to identify whether the second NF node (30) is operative.

9. A method as claimed in claim 8, wherein:
the status is checked with the second NF node (30) or a network repository function, NRF (60).

10. A method as claimed in claim 9, wherein:
checking the status with the second NF node (30) comprises:
initiating transmission of a third request towards the second NF node (30), wherein the third request is a request for the status of the second NF node (30),
wherein:
the third request is a hypertext transfer protocol, HTTP, ping request or a HTTP head request; and/or
if a positive response to the third request is received from the second NF node (30), the second NF node (30) is operative; or
if no positive response to the third request is received from the second NF node (30), the second NF node (30) is inoperative.

11. A method as claimed in any of the preceding claims, wherein:
initiating (102, 704, 706) transmission of the first request towards the third NF node via the second SCP node (50) comprises initiating (102, 704, 706) transmission of the first request towards the third NF node via the second SCP node (50) with information identifying the third NF node; and/or
the method comprises receiving (708, 710) a response to the first request from the third NF node via the second SCP node (50).

12. A method as claimed in claim 11, wherein:
the response comprises:
information indicative that the first SCP node (10) initiated transmission of the first request towards the third NF node via another SCP node; or
information indicative that the first SCP node (10) initiated transmission of the first request towards the third NF node via the second SCP node.

13. A method as claimed in any of the preceding claims, the method comprising:
initiating (712) transmission of the response to the first NF node (20); and/or
initiating transmission of one or more subsequent first requests for the execution of a service (40),
wherein the transmission of the one or more subsequent first requests is initiated towards the third NF node via the second SCP node (50) or via a fourth SCP node for the third NF node to execute the service (40), and
wherein the fourth SCP node is a different SCP node to the second SCP node (50).

14. A method as claimed in claim 13, wherein:
the fourth SCP node is in the same SCP domain as the second SCP node (50); and/or
the transmission of the one or more subsequent first requests is initiated towards the third NF node via the second SCP node (50) if the second SCP node (50) is marked at the first NF node (20) as a preferred SCP node for subsequent first requests or as having a highest priority for subsequent first requests; or
the transmission of the one or more subsequent first requests is initiated towards the third NF node via the fourth SCP node if the fourth SCP node is marked at the first NF node (20) as a preferred SCP node for subsequent first requests or as having a highest priority for subsequent first requests.

15. A method as claimed in claim 13 or 14, wherein:
initiating transmission of the one or more subsequent first requests towards the third NF node via the first SCP node (10) is avoided if the first SCP node is marked at the first NF node (20) as not preferred for subsequent first requests or as not having a highest priority for subsequent first requests.

16. A method as claimed in claim 15, wherein:
the first SCP node is only temporarily marked at the first NF node (20) as not preferred for subsequent first requests or as not having a highest priority for subsequent first requests.

17. A method as claimed in any of the preceding claims, wherein:
the method is performed if no positive response is received from the second NF node (30) to a first request transmitted towards at least two second NF nodes (30) via the first SCP node (10).

18. A method performed by a system, the method comprising:
a first method as claimed in any of claims 1 to 17; and
a second method performed by the second SCP node (50), wherein the second method comprises:
initiating (202, 706) transmission of a first request towards the third NF node in response to receiving the first request (704) from the first SCP node (10),
wherein the first request (704) is received from the first SCP node (10) if no positive response is received from the second NF node (30) to the first request (638, 654) transmitted towards the second NF node (30) via the first SCP node (10).

19. A first SCP node (10) comprising:
processing circuitry (12) configured to operate in accordance with any of claims 1 to 17.

20. A system comprising:
at least one first SCP node (10) as claimed in claim 19; and
at least one second SCP node (50) comprising processing circuitry (52) configured to operate in accordance with the second method as claimed in claim 18.

21. A computer program comprising instructions which, when executed by processing circuitry, cause the processing circuitry to perform the method according to any of claims 1 to 18.

## Patentansprüche

1. Verfahren zum Handhaben einer Dienstanforderung in einem Netzwerk, wobei das Verfahren durch einen ersten Dienstkommunikations-Proxy-, SCP-, Knoten (10) durchgeführt wird, der dazu konfiguriert ist, als ein SCP zwischen einem ersten Netzwerkfunktions-, NF-, Knoten (20) eines Dienstkonsumenten und einem zweiten NF-Knoten (30) eines Dienstherstellers in dem Netzwerk betrieben zu werden, wobei das Verfahren Folgendes umfasst:
Initiieren (102, 704, 706) einer Übertragung einer ersten Anforderung an einen dritten NF-Knoten eines Dienstherstellers über einen zweiten SCP-Knoten (50), wenn von dem zweiten NF-Knoten (30) keine positive Antwort auf die erste Anforderung (638, 654) empfangen wird, die über den ersten SCP-Knoten (10) an den zweiten NF-Knoten (30) übertragen wurde,
wobei die erste Anforderung (638, 654) an den zweiten NF-Knoten (30) übertragen wird, damit der zweite NF-Knoten (30) einen durch den ersten NF-Knoten (20) angeforderten Dienst (40) ausführt, und die Übertragung der ersten Anforderung an den dritten NF-Knoten initiiert wird, damit der dritte NF-Knoten den Dienst (40) ausführt, wobei der zweite SCP-Knoten (50) dazu konfiguriert ist, als ein SCP zwischen dem ersten NF-Knoten (20) und dem dritten NF-Knoten in dem Netzwerk betrieben zu werden, und wobei der zweite SCP-Knoten (50) ein anderer SCP-Knoten als der erste SCP-Knoten (10) ist.

2. Verfahren nach Anspruch 1, wobei das Verfahren Folgendes umfasst:
Identifizieren (700), dass die erste Anforderung über einen anderen SCP-Knoten zu übertragen ist; und/oder
Auswählen (702) des zweiten SCP-Knotens (50).

3. Verfahren nach Anspruch 1 oder 2, wobei:
der zweite SCP-Knoten (50) ein SCP-Knoten ist, der sich in der gleichen SCP-Domäne befindet wie der erste SCP-Knoten (10);
die Übertragung der ersten Anforderung an den dritten NF-Knoten über den zweiten SCP-Knoten (50) initiiert wird, wenn von dem zweiten NF-Knoten (30) keine positive Antwort auf die erste Anforderung empfangen wird, da eine Verbindung des ersten SCP-Knotens (10) mit dem zweiten NF-Knoten (30)fehlschlägt; und/oder
das Verfahren Überprüfen, ob die Verbindung des ersten SCP-Knotens (10) mit dem zweiten NF-Knoten (30) fehlgeschlagen ist, und/oder Überprüfen, ob der zweite NF-Knoten (30) betriebsbereit ist, umfasst.

4. Verfahren nach Anspruch 3, wobei:
der erste SCP-Knoten (10), dessen Verbindung mit dem zweiten NF-Knoten (30) fehlschlägt, Folgendes ist:
der erste SCP-Knoten (10) selbst, dessen Verbindung mit dem zweiten NF-Knoten (30) fehlschlägt; oder
mindestens ein dritter SCP-Knoten, dessen Verbindung mit dem zweiten NF-Knoten (30) fehlschlägt, wobei der mindestens eine dritte SCP-Knoten dazu konfiguriert ist, als ein SCP zwischen dem ersten SCP-Knoten (10) und dem zweiten NF-Knoten (30) betrieben zu werden.

5. Verfahren nach Anspruch 4, wobei das Verfahren Folgendes umfasst:
Überprüfen eines Status des mindestens einen dritten SCP-Knotens, um zu identifizieren, ob die Verbindung des mindestens einen dritten SCP-Knotens mit dem zweiten NF-Knoten (30) fehlgeschlagen ist.

6. Verfahren nach Anspruch 5, wobei:
der Status mit dem mindestens einen dritten SCP-Knoten oder einer Netzwerk-Repository-Funktion, NRF (60), überprüft wird.

7. Verfahren nach Anspruch 6, wobei:
das Überprüfen des Status mit dem mindestens einen dritten SCP-Knoten Folgendes umfasst:
Initiieren der Übertragung einer zweiten Anforderung an den dritten SCP-Knoten, wobei die zweite Anforderung eine Anforderung für den Status des dritten SCP-Knotens ist,
wobei:
die zweite Anforderung eine Hypertext-Transfer-Protokoll-, HTTP-, Ping-Anforderung oder eine HTTP-Head-Anforderung ist; und/oder
wenn von dem dritten SCP-Knoten keine positive Antwort auf die zweite Anforderung empfangen wird, die Verbindung des dritten SCP-Knotens mit dem zweiten NF-Knoten (30) fehlgeschlagen ist; oder
wenn eine positive Antwort auf die zweite Anforderung von dem dritten SCP-Knoten empfangen wird, die Verbindung des dritten SCP-Knotens mit dem zweiten NF-Knoten (30) erfolgreich ist.

8. Verfahren nach einem der Ansprüche 3 bis 7, wobei:
das Überprüfen, ob der zweite NF-Knoten (30) betriebsbereit ist, Folgendes umfasst:
Überprüfen eines Status des zweiten NF-Knotens (30), um zu identifizieren, ob der zweite NF-Knoten (30) betriebsbereit ist.

9. Verfahren nach Anspruch 8, wobei:
der Status mit dem zweiten NF-Knoten (30) oder einer Netzwerk-Repository-Funktion, NRF (60), überprüft wird.

10. Verfahren nach Anspruch 9, wobei:
das Überprüfen des Status mit dem zweiten NF-Knoten (30) Folgendes umfasst:
Initiieren der Übertragung einer dritten Anforderung an den zweiten NF-Knoten (30), wobei die dritte Anforderung eine Anforderung für den Status des zweiten NF-Knotens (30) ist,
wobei:
die dritte Anforderung eine Hypertext-Transfer-Protokoll-, HTTP-, Ping-Anforderung oder eine HTTP-Head-Anforderung ist; und/oder
wenn eine positive Antwort auf die dritte Anforderung von dem zweiten NF-Knoten (30) empfangen wird, der zweite NF-Knoten (30) betriebsbereit ist; oder
wenn von dem zweiten NF-Knoten (30) keine positive Antwort auf die dritte Anforderung empfangen wird, der zweite NF-Knoten (30) nicht betriebsbereit ist.

11. Verfahren nach einem der vorhergehenden Ansprüche, wobei:
das Initiieren (102, 704, 706) der Übertragung der ersten Anforderung an den dritten NF-Knoten über den zweiten SCP-Knoten (50) Initiieren (102, 704, 706) der Übertragung der ersten Anforderung an den dritten NF-Knoten über den zweiten SCP-Knoten (50) mit Informationen, die den dritten NF-Knoten identifizieren, umfasst; und/oder
das Verfahren Empfangen (708, 710) einer Antwort auf die erste Anforderung von dem dritten NF-Knoten über den zweiten SCP-Knoten (50) umfasst.

12. Verfahren nach Anspruch 11, wobei:
die Antwort Folgendes umfasst:
Informationen, die angeben, dass der erste SCP-Knoten (10) die Übertragung der ersten Anforderung an den dritten NF-Knoten über einen anderen SCP-Knoten initiiert hat; oder
Informationen, die angeben, dass der erste SCP-Knoten (10) die Übertragung der ersten Anforderung an den dritten NF-Knoten über den zweiten SCP-Knoten initiiert hat.

13. Verfahren nach einem der vorhergehenden Ansprüche, wobei das Verfahren Folgendes umfasst:
Initiieren (712) der Übertragung der Antwort an den ersten NF-Knoten (20); und/oder
Initiieren der Übertragung einer oder mehrerer nachfolgender erster Anforderungen zur Ausführung eines Dienstes (40),
wobei die Übertragung der einen oder der mehreren nachfolgenden ersten Anforderungen an den dritten NF-Knoten über den zweiten SCP-Knoten (50) oder über einen vierten SCP-Knoten initiiert wird, damit der dritte NF-Knoten den Dienst (40) ausführt, und
wobei der vierte SCP-Knoten ein anderer SCP-Knoten ist als der zweite SCP-Knoten (50).

14. Verfahren nach Anspruch 13, wobei:
der vierte SCP-Knoten in der gleichen SCP-Domäne liegt wie der zweite SCP-Knoten (50); und/oder
die Übertragung der einen oder der mehreren nachfolgenden ersten Anforderungen an den dritten NF-Knoten über den zweiten SCP-Knoten (50) initiiert wird, wenn der zweite SCP-Knoten (50) an dem ersten NF-Knoten (20) als ein bevorzugter SCP-Knoten für nachfolgende erste Anforderungen oder als eine höchste Priorität für nachfolgende erste Anforderungen aufweisend gekennzeichnet ist; oder
die Übertragung der einen oder der mehreren nachfolgenden ersten Anforderungen an den dritten NF-Knoten über den vierten SCP-Knoten initiiert wird, wenn der vierte SCP-Knoten an dem ersten NF-Knoten (20) als ein bevorzugter SCP-Knoten für nachfolgende erste Anforderungen oder als eine höchste Priorität für nachfolgende erste Anforderungen aufweisend gekennzeichnet ist.

15. Verfahren nach Anspruch 13 oder 14, wobei:
das Initiieren der Übertragung der einen oder der mehreren nachfolgenden ersten Anforderungen an den dritten NF-Knoten über den ersten SCP-Knoten (10) vermieden wird, wenn der erste SCP-Knoten an dem ersten NF-Knoten (20) als nicht bevorzugt für nachfolgende erste Anforderungen oder als nicht eine höchste Priorität für nachfolgende erste Anforderungen aufweisend gekennzeichnet ist.

16. Verfahren nach Anspruch 15, wobei:
der erste SCP-Knoten nur temporär an dem ersten NF-Knoten (20) als nicht bevorzugt für nachfolgende erste Anforderungen oder als nicht eine höchste Priorität für nachfolgende erste Anforderungen aufweisend gekennzeichnet ist.

17. Verfahren nach einem der vorhergehenden Ansprüche, wobei:
das Verfahren durchgeführt wird, wenn von dem zweiten NF-Knoten (30) keine positive Antwort auf eine erste Anforderung empfangen wird, die über den ersten SCP-Knoten (10) an mindestens zwei zweite NF-Knoten (30) übertragen wurde.

18. Verfahren, das durch ein System durchgeführt wird, wobei das Verfahren Folgendes umfasst:
ein erstes Verfahren nach einem der Ansprüche 1 bis 17; und
ein zweites Verfahren, das durch den zweiten SCP-Knoten (50) durchgeführt wird, wobei das zweite Verfahren Folgendes umfasst:
Initiieren (202, 706) einer Übertragung einer ersten Anforderung an den dritten NF-Knoten als Reaktion auf Empfangen der ersten Anforderung (704) von dem ersten SCP-Knoten (10),
wobei die erste Anforderung (704) von dem ersten SCP-Knoten (10) empfangen wird, wenn von dem zweiten NF-Knoten (30) keine positive Antwort auf die erste Anforderung (638, 654) empfangen wird, die über den ersten SCP-Knoten (10) an den zweiten NF-Knoten (30) übertragen wurde.

19. Erster SCP-Knoten (10), umfassend:
eine Verarbeitungsschaltung (12), die dazu konfiguriert ist, nach einem der Ansprüche 1 bis 17 betrieben zu werden.

20. System, umfassend:
mindestens einen ersten SCP-Knoten (10) nach Anspruch 19; und
mindestens einen zweiten SCP-Knoten (50), umfassend eine Verarbeitungsschaltung (52), die dazu konfiguriert ist, gemäß dem zweiten Verfahren nach Anspruch 18 betrieben zu werden.

21. Computerprogramm, umfassend Anweisungen, die, wenn sie durch eine Verarbeitungsschaltung ausgeführt werden, die Verarbeitungsschaltung veranlassen, das Verfahren nach einem der Ansprüche 1 bis 18 durchzuführen.

## Revendications

1. Procédé de gestion d'une requête de service dans un réseau, dans lequel le procédé est exécuté par un premier noeud mandataire de communication de service, SCP, (10) qui est configuré pour fonctionner comme un SCP entre un premier noeud de fonction réseau, NF, (20) d'un consommateur de service et un deuxième noeud NF (30) d'un producteur de service dans le réseau, le procédé comprenant :
l'initiation (102, 704, 706) d'une transmission d'une première requête vers un troisième noeud NF d'un producteur de services via un deuxième noeud SCP (50) si aucune réponse positive n'est reçue du deuxième noeud NF (30) à la première requête (638, 654) transmise vers le deuxième noeud NF (30) via le premier noeud SCP (10),
dans lequel la première requête (638, 654) est transmise vers le deuxième noeud NF (30) pour que le deuxième noeud NF (30) exécute un service (40) demandé par le premier noeud NF (20) et la transmission de la première requête est initiée vers le troisième noeud NF pour que le troisième noeud NF exécute le service (40), dans lequel le deuxième noeud SCP (50) est configuré pour fonctionner comme un SCP entre le premier noeud NF (20) et le troisième noeud NF dans le réseau, et dans lequel le deuxième nœud SCP (50) est un nœud SCP différent du premier nœud SCP (10) .

2. Procédé selon la revendication 1, le procédé comprenant :
l'identification (700) que la première requête doit être transmise via un noeud SCP différent ; et/ou
la sélection (702) du deuxième noeud SCP (50).

3. Procédé selon la revendication 1 ou 2, dans lequel :
le deuxième noeud SCP (50) est un noeud SCP qui se trouve dans le même domaine SCP que le premier noeud SCP (10) ;
la transmission de la première requête vers le troisième noeud NF via le deuxième noeud SCP (50) est initiée si aucune réponse positive n'est reçue du deuxième noeud NF (30) à la première requête en raison de l'échec de connexion du premier noeud SCP (10) au deuxième noeud NF (30) ; et/ou
le procédé comprend le fait de vérifier si le premier noeud SCP (10) n'a pas réussi à se connecter au deuxième noeud NF (30) et/ou le fait de vérifier si le deuxième noeud NF (30) est opérationnel.

4. Procédé selon la revendication 3, dans lequel :
le premier noeud SCP (10) qui ne réussit pas à se connecter au deuxième noeud NF (30) est :
le premier noeud SCP (10) lui-même qui ne réussit pas à se connecter au deuxième noeud NF (30) ; ou
au moins un troisième noeud SCP qui ne réussit pas à se connecter au deuxième noeud NF (30), dans lequel l'au moins un troisième noeud SCP est configuré pour fonctionner comme un SCP entre le premier noeud SCP (10) et le deuxième noeud NF (30).

5. Procédé selon la revendication 4, le procédé comprenant :
la vérification d'un état de l'au moins un troisième noeud SCP pour identifier si l'au moins un troisième noeud SCP n'a pas réussi à se connecter au deuxième noeud NF (30).

6. Procédé selon la revendication 5, dans lequel :
l'état est vérifié avec l'au moins un troisième noeud SCP ou une fonction de référentiel réseau, NRF (60).

7. Procédé selon la revendication 6, dans lequel :
la vérification de l'état avec l'au moins un troisième noeud SCP comprend :
l'initiation de la transmission d'une deuxième requête vers le troisième noeud SCP, dans lequel la deuxième requête est une requête concernant l'état du troisième noeud SCP,
dans lequel :
la deuxième requête est une requête ping de protocole de transfert hypertexte, HTTP, ou une requête d'en-tête HTTP ; et/ou
si aucune réponse positive à la deuxième requête n'est reçue du troisième noeud SCP, le troisième noeud SCP n'a pas réussi à se connecter au deuxième noeud NF (30) ; ou
si une réponse positive à la deuxième requête est reçue du troisième noeud SCP, le troisième noeud SCP a réussi à se connecter au deuxième noeud NF (30).

8. Procédé selon l'une quelconque des revendications 3 à 7, dans lequel :
le fait de vérifier si le deuxième noeud NF (30) est opérationnel comprend :
la vérification d'un état du deuxième noeud NF (30) pour identifier si le deuxième noeud NF (30) est opérationnel.

9. Procédé selon la revendication 8, dans lequel :
l'état est vérifié avec le deuxième noeud NF (30) ou une fonction de référentiel réseau, NRF (60).

10. Procédé selon la revendication 9, dans lequel :
la vérification de l'état avec le deuxième noeud NF (30) comprend :
l'initiation de la transmission d'une troisième requête vers le deuxième noeud NF (30), dans lequel la troisième requête est une requête concernant l'état du deuxième noeud NF (30),
dans lequel :
la troisième requête est une requête ping de protocole de transfert hypertexte, HTTP, ou une requête d'en-tête HTTP ; et/ou
si une réponse positive à la troisième requête est reçue du deuxième noeud NF (30), le deuxième noeud NF (30) est opérationnel ; ou
si aucune réponse positive à la troisième requête n'est reçue du deuxième noeud NF (30), le deuxième noeud NF (30) est non opérationnel.

11. Procédé selon l'une quelconque des revendications précédentes, dans lequel :
l'initiation (102, 704, 706) de la transmission de la première requête vers le troisième noeud NF via le deuxième noeud SCP (50) comprend l'initiation (102, 704, 706) de la transmission de la première requête vers le troisième noeud NF via le deuxième noeud SCP (50) avec des informations identifiant le troisième noeud NF ; et/ou
le procédé comprend la réception (708, 710) d'une réponse à la première requête provenant du troisième noeud NF via le deuxième noeud SCP (50).

12. Procédé selon la revendication 11, dans lequel :
la réponse comprend :
des informations indiquant que le premier noeud SCP (10) a initié la transmission de la première requête vers le troisième noeud NF via un autre noeud SCP ; ou
des informations indiquant que le premier noeud SCP (10) a initié la transmission de la première requête vers le troisième noeud NF via le deuxième noeud SCP.

13. Procédé selon l'une quelconque des revendications précédentes, le procédé comprenant :
l'initiation (712) de la transmission de la réponse au premier noeud NF (20) ; et/ou
l'initiation de la transmission d'une ou de plusieurs premières requêtes ultérieures pour l'exécution d'un service (40),
dans lequel la transmission des une ou plusieurs premières requêtes ultérieures est initiée vers le troisième noeud NF via le deuxième noeud SCP (50) ou via un quatrième noeud SCP pour que le troisième noeud NF exécute le service (40), et
dans lequel le quatrième noeud SCP est un noeud SCP différent du deuxième noeud SCP (50).

14. Procédé selon la revendication 13, dans lequel :
le quatrième noeud SCP se trouve dans le même domaine SCP que le deuxième noeud SCP (50) ; et/ou
la transmission des une ou plusieurs premières requêtes ultérieures est initiée vers le troisième noeud NF via le deuxième noeud SCP (50) si le deuxième noeud SCP (50) est marqué au niveau du premier noeud NF (20) comme un noeud SCP préféré pour des premières requêtes ultérieures ou comme ayant la priorité la plus élevée pour des premières requêtes ultérieures ; ou
la transmission des une ou plusieurs premières requêtes ultérieures est initiée vers le troisième noeud NF via le quatrième noeud SCP si le quatrième noeud SCP est marqué au niveau du premier noeud NF (20) comme un noeud SCP préféré pour des premières requêtes ultérieures ou comme ayant la priorité la plus élevée pour des premières requêtes ultérieures.

15. Procédé selon la revendication 13 ou 14, dans lequel :
l'initiation de la transmission des une ou plusieurs premières requêtes ultérieures vers le troisième noeud NF via le premier noeud SCP (10) est évitée si le premier noeud SCP est marqué au niveau du premier noeud NF (20) comme n'étant pas préféré pour des premières requêtes ultérieures ou comme n'ayant pas la priorité la plus élevée pour des premières requêtes ultérieures.

16. Procédé selon la revendication 15, dans lequel :
le premier noeud SCP n'est marqué que temporairement au niveau du premier noeud NF (20) comme n'étant pas préféré pour des premières requêtes ultérieures ou comme n'ayant pas la priorité la plus élevée pour des premières requêtes ultérieures.

17. Procédé selon l'une quelconque des revendications précédentes, dans lequel :
le procédé est exécuté si aucune réponse positive n'est reçue du deuxième noeud NF (30) à une première requête transmise vers au moins deux deuxièmes noeuds NF (30) via le premier noeud SCP (10).

18. Procédé exécuté par un système, le procédé comprenant :
un premier procédé selon l'une quelconque des revendications 1 à 17 ; et
un second procédé exécuté par le deuxième noeud SCP (50), dans lequel le second procédé comprend :
l'initiation (202, 706) de la transmission d'une première requête vers le troisième noeud NF en réponse à la réception de la première requête (704) du premier noeud SCP (10),
dans lequel la première requête (704) est reçue du premier noeud SCP (10) si aucune réponse positive n'est reçue du deuxième noeud NF (30) à la première requête (638, 654) transmise vers le deuxième noeud NF (30) via le premier noeud SCP (10).

19. Premier noeud SCP (10) comprenant :
un circuit de traitement (12) configuré pour fonctionner selon l'une quelconque des revendications 1 à 17.

20. Système comprenant :
au moins un premier noeud SCP (10) selon la revendication 19 ; et
au moins un deuxième noeud SCP (50) comprenant un circuit de traitement (52) configuré pour fonctionner conformément au second procédé selon la revendication 18.

21. Programme informatique comprenant des instructions qui, lorsqu'elles sont exécutées par un circuit de traitement, amènent le circuit de traitement à exécuter le procédé selon l'une quelconque des revendications 1 à 18.
